# EUROPEAN PATENT SPECIFICATION

(11) **EP 0 613 449 B1**
(45) Date of publication and mention of the grant of the patent: **13.12.1995**
(21) Application number: 92922209.9
(22) Date of filing: 26.10.1992
(51) Int. Cl.: C01B 31/34

(54) **LOW TEMPERATURE METHOD FOR SYNTHESIZING MICROGRAIN TUNGSTEN CARBIDE**
NIEDRIGTEMPERATURVERFAHREN ZUR SYNTHESE VON FEINSTKÖRNIGEM WOLFRAMCARBID
PROCEDE DE SYNTHESE A BASSE TEMPERATURE DE CARBURE DE TUNGSTENE EN MICROGRAINS

(30) Priority: 20.11.1991 US 795135
(43) Date of publication of application: 07.09.1994
(73) Proprietor: THE DOW CHEMICAL COMPANY, Midland, Michigan 48640 (US)
(72) Inventor: DUNMEAD, Stephen, D., Midland, MI 48642 (US); MOORE, William, G., Midland, MI 48640 (US); GRINDAHL, Eric, J., Bay City, MI 48708 (US)
(74) Representative: Burford, Anthony Frederick
(86) International application number: PCT/US92/09056
(87) International publication number: WO 93/10042

(56) References cited:
- US-A- 4 115 526
- US-A- 4 460 697
- JOURNAL OF THE AMERICAN CHEMICAL SOCIETY vol. 79, no. 17, 5 September 1957, WASHINGTON, DC US pages 4629 - 4631 A.E.NEWKIRK ET AL.
- DATABASE WPIL Week 8412, Derwent Publications Ltd., London, GB; AN 84-072007 & JP-A-59026909
- PATENT ABSTRACTS OF JAPAN vol. 8, no. 114 (C-225)26 May 1984 & JP-A-59026909
- CHEMICAL ABSTRACTS, vol. 111, no. 10, 4 September 1989, Columbus, Ohio, US; abstract no. 80876p, page 171 ; & JP-A-01115810

## Description

This invention relates generally to a method of converting a tungsten-containing material, tungsten trioxide (WO₃), to tungsten carbide (WC) without first reducing all of the WO₃ to tungsten as a separate intermediate.

Tungsten carbide, a ceramic material having good chemical stability and corrosion resistance, has been called the strongest of all structural materials. It has high hardness, wear resistance and temperature resistance. Tungsten carbide powders are converted by conventional processes to form cemented carbides, dies and cutting tools, wear resistant parts, cermets and electrical resistors. They are also used as abrasives in liquids. Cemented tungsten carbides are mixtures of 80 to 95 percent by weight WC and 5 to 20 percent by weight cobalt or other ductile metal as a binder phase. Cemented tungsten carbides are useful for forming tools and as abrasives for machining and grinding metals, rock, molded products, porcelain and glass. They are also useful in forming gauges, blast nozzles, knives and drill bits.

The properties ultimately possessed by an article formed from WC powder depend, to a great extent, upon WC grain size and process conditions used to form the article. Certain tungsten carbides of fine grain or particle sizes (known as micrograin tungsten carbides) from 0.05 to 0.2 micrometers in diameter are especially useful for certain purposes, such as end milling and circuit board drilling applications. The particle size range suggests that micrograin tungsten carbides may also be useful in catalytic processes.

Micrograin particulate materials preferably have a controlled morphology, a narrow size distribution, a well-defined stoichiometry and relatively high purity. Micrograin WC is not readily prepared from larger WC particles. The hardness for which WC is valued also impairs or prevents the mechanical reduction of large WC particles to a smaller size by conventional methods such as grinding or milling. Accordingly, it would be very desirable to directly manufacture micrograin WC particles.

Some metal carbides can be produced by the carbothermal reduction of a metal oxide with solid carbon under a reducing atmosphere. Hydrogen is a conventional reducing gas. Conventional teachings do not, however, advocate the direct carbothermal reduction of WO₃ (or another solid, tungsten-containing material) with carbon in a molecular hydrogen atmosphere. For example, Funtai Oyobi Funmatsuyakin, v. 22(1), pp. 12-16 (1975) (Chemical Abstracts 88(24):175199r) teaches that the reduction of WO₃ by hydrogen occurs preferentially over the reduction of WO₃ by carbon when a mixture of WO₃ and carbon is heated in an atmosphere of molecular hydrogen.

A variety of other processes have also been employed to make fine WC powders. While they have each enjoyed relative success, they have also individually been subject to a variety of drawbacks. In general, the prior processes have been relatively expensive in requiring substantial capital investment in gas composition control systems and particle collection systems. Nonetheless, they yield products that have large variations in particle size and relatively low yields. While these drawbacks are particularly evident with gas-phase methods (entailing the reaction of at least two gaseous reactants heated in a furnace, or heated by RF induction or plasma) they are also present in other methods.

US-A-4,115,526 is directed to a method for producing fine particle size tungsten or WC which entails a first step of reducing tungsten oxide in hydrogen under conditions which avoid the formation of tungsten oxide whiskers. The resulting powder is then subject to carburization in a methane atmosphere. This process is disadvantageous in requiring two different atmospheres and the isolation of an intermediate material.

US-A-4,460,697 discloses a method for synthesizing WC from tungsten oxide by heating tungsten oxide to greater than 800°C in the presence of reducing and carbonizing gases, either sequentially or at the same time. When both reducing and carbonizing gases are employed at the same time, the gases are placed in a plasma condition.

A.E. Newkirk et al. (J. Am. Chem. Soc. 79 (1957) 4629 - 4631) describes the preparation of tungsten carbide by treating a tungsten-containing precursor in a mixed hydrogen and methane atmosphere. It teaches that final temperatures on the order of 900°C to 1025°C sustained for 3 to 4 hours are required to produce tungsten carbide.

One object of the present invention is to convert WO₃ or another solid, tungsten-containing material to WC directly with a single reaction atmosphere of consistent composition.

A second object of the present invention is to provide a relatively inexpensive method of producing WC that is simpler than prior methods. It should obviate the need for: isolating or cooling an intermediate product; adding carbon to an intermediate product; controlling the ratio of the partial pressures of carbon monoxide and/or carbon dioxide in the treatment atmosphere; and changing proportions of the atmosphere during treatment.

One aspect of the present invention is a method for forming a fine grained tungsten carbide that has a particle size within a range of from 0.05 to 0.2 »m in diameter, which comprises heating a solid tungsten-containing material in a flowing atmosphere containing molecular hydrogen and molecular methane and having a fixed ratio of hydrogen to methane, for a time sufficient to convert substantially all of said material to tungsten carbide, wherein such heating is carried out at a first heating rate of 5 to 50°C per minute from 25°C to 535°C, then at a second heating rate, lower than the first heating rate, of 1 to 10°C per minute from 535°C to 850°C, and thereafter held at about 850°C for 15 minutes to 3 hours. The tungsten-containing material is preferably WO₃.

In a related aspect, the atmosphere can also contain argon, or have a ratio of 90 to 99 percent hydrogen to 1 to 10 percent methane, or both. In another related aspect, the heating is carried out in a space having a defined volume (such as a furnace). The flow rate of the atmosphere through such a space is at least 1, preferably 10, and most preferably about 100 volumes per minute.

In a second aspect, the present invention is directed to a method for forming a tungsten carbide having an average particle size between 0.05 and 0.2 »m, comprising heating powdered or particulate tungsten trioxide in a flowing atmosphere containing argon, molecular hydrogen and molecular methane, the ratio of hydrogen to methane in the atmosphere being fixed at 92 to 97 volume percent hydrogen to 3 to 8 volume percent methane, for a time sufficient to convert substantially all of the tungsten trioxide or other material to tungsten carbide, wherein the heating is carried out at a first heating rate of about 20°C per minute from 25°C to 535°C, and at a second heating rate of about 5°C per minute from 535°C to 850°C, and thereafter held at about 850°C for 30 to 90 minutes, such that the resultant product achieves a constant weight. The amounts of hydrogen and methane total 100 percent.

Applicants have discovered that the growth of WC particles in the micrograin size range can be selectively controlled by controlling the presence of just one of the products arising from the various reactions that occur during the conversion of WO₃ or other tungsten-containing solid materials to WC. The reduction of WO₃ is representative of the reduction of other tungsten-containing materials. Accordingly, subsequent references to WO₃ include and exemplify such other materials, so long as they are subject to reduction to tungsten in hydrogen. Ammonium paratungstate is one such material.

A review of the various reactions involved provides a basis for better appreciation of the nature of temperature control. The desired reduction reaction of WO₃ to tungsten metal in a hydrogen atmosphere is:

(1) WO₃ + 3H₂ ----------> W + 3H₂O.

Below 535°C, however, this reaction is incomplete. For example, at 325°C, the solid product is not tungsten, but is instead a composition having the approximate formula WO_{2.8}. The formula changes at temperatures of 425°C and 450°C to, respectively, WO_{2.72} and WO_{2.0}. Only when the reaction temperature approaches 535°C is the solid product from the reaction substantially a tungsten metal powder.

The desired reduction reaction is temperature sensitive above this point. When the reaction takes place at 537°C, the resultant tungsten powder has an average diameter of about 0.05 »m. At higher temperatures, larger particles are obtained. For example, at a reaction temperature of 900°C, the tungsten powder product has an average diameter of 2 »m. But temperature is not the only parameter affecting the particle size of the solid product. The tungsten particle size gradient (resulting from the reduction reaction at a given temperature) progressively increases with an increase in the partial pressure of water, the other product of the reaction. The water is capable of reacting with any unreacted WO₃ to yield orthotungstic acid, WO₂(OH)₂. Applicants observe that the relative volatility of the ortho-tungstic acid appears to encourage tungsten particle growth and ultimately determines the particle size of the WC product.

Applicants' invention involves including in the hydrogen reduction atmosphere an agent that consumes the water produced during the reduction reaction. This limits particle growth by limiting the production of orthotungstic acid. The preferred consumption agent is methane, although carbonaceous gases such as carbon monoxide and carbon dioxide are contemplated as equivalents. The advantage of a carbonaceous consumption agent such as methane is that the agent not only provides the carbon necessary for carburization of the tungsten, through the equilibrium reactions:

(2) CH₄ <----------> C + 2H₂

and

(3) CH₄ + H₂O <----------> CO + 3H₂,

the latter in turn providing carbon through the equilibrium reaction:

(4) CO + H₂ <------------> C + H₂O;

but simultaneously providing for the consumption of water by the equilibrium reaction:

(5) C + 2H₂O <----------------> CO + 2H₂.

These interrelated equilibria are of course reversible and temperature dependent. Additionally, reaction (5) is subject to the competing equilibrium reaction:

(6) CO₂ + C <--------------> 2CO.

Unexpectedly, it is not necessary to attempt to quantify these equilibria in order to achieve substantially complete, direct conversion of WO₃ to WC. Applicants have found that when an atmosphere of fixed proportions of molecular hydrogen and the consuming agent are continuously supplied to WO₃, the partial pressure of the water produced in the reaction (and thus the conversion of WO₃ to WC) can be completely regulated by a program of heating in which only the temperature, heating rates and residence or hold time need be controlled.

The present invention thus entails heating WO₃, or another solid, tungsten-containing material, in a flowing atmosphere containing molecular hydrogen and molecular methane (or another carbonaceous, water-consuming agent), and having a fixed ratio of hydrogen to methane (or other carbonaceous, water-consuming agent). In this regard, "molecular" means merely that no unusual steps are taken to place the hydrogen or methane in a dissociated state, for example, by photolysis or creation of plasma conditions, except insofar as incidental to heating at relatively low temperatures. The flowing atmosphere desirably contains a ratio of 90 to 99 percent hydrogen to 1 to 10 percent methane, and preferably 92 to 97 percent hydrogen to 3 to 8 percent methane. The percentages can be determined on a molar (molecular) basis, a gas volume basis, or a gas partial pressure basis, as may be most convenient, since these measures appear to be essentially equivalent under the temperatures and pressures contemplated within the invention. The flowing atmosphere may include argon or another inert gas as a diluting agent, so long as the ratio of hydrogen to methane remains fixed. If the desired use of the micrograin WC requires minimal free carbon, the ratio of methane to hydrogen in the flowing atmosphere should be less than that dictated by the equilibrium decomposition reaction for methane at the peak temperature.

The present invention also entails heating the WO₃ by a temperature ramping program. The temperature ramping program includes two continuously rising temperature steps followed by a holding period at the temperature achieved at the end of the second step. The first step is carried out at a first heating rate of 5 to 50°C per minute, preferably at about 20°C per minute. The first step raises the temperature from 25°C (room temperature or ambient shop temperature) to 535°C. The second step immediately continues the heating at a second heating rate lower than the first heating rate. The second heating rate is 1 to 10°C per minute, preferably about 5°C per minute. The second step raises the temperature from 535°C to a final temperature of about 850°C. The temperature is then held at the final temperature for 15 minutes to 3 hours, preferably for 30 minutes to 90 minutes. If trace amounts or larger, but minor, amounts of tungsten metal or ditungsten carbide are acceptable, the final temperature may be as low as 800°C. For best results, however, the final temperature should be as close to 850°C as possible, with a range of 840°C to 855°C being preferred.

The temperature selected for the end of the first step and the beginning of the second step is about equal to the reported minimum temperature (537°C) at which the reduction of WO₃ to tungsten powder would be just complete in a pure hydrogen atmosphere. It is not, however, essential to the success of the present invention that the first rate be slow enough to cause the reduction of the WO₃ to be complete at the end of the first step. In fact, at the end of the first step, the reactant powder is likely to be a rather complex mixture of products. It is important that this complex mixture be fully reduced and carburized during the second step and the hold time after the second step. The hold time must be long enough to complete carburization and to lower the level of free carbon in the resulting product to an acceptable amount. The acceptable level of free carbon or other contaminants (such as oxygen) depends upon the use to which the WC powder will be put. Typically, free carbon and oxygen levels of 1 and 2 percent or less by weight, respectively, are desired and can readily be achieved by the method of the present invention.

The WO₃ (or other solid, tungsten-containing material) useful for conversion into WC by the method of the present invention requires no special pretreatment and need not possess any particular characteristics. The WO₃ should be pure enough to give a WC product that has contaminants at or below any particular level desired or needed in view of the use to which the WC product will be put. The WO₃ particle size should be reasonably uniform and small enough that the amount to be treated is evenly heated during practice of the method of the present invention. A WO₃ particle diameter on the order of 25 »m is useful to yield WC particles having an average diameter between 0.05 and 0.2 »m. One such WO₃ powder is that sold by GTE Corporation under the name "GTE TO-3".

During heating of the WO₃ powder, the flow rate of the atmosphere should be as great as possible without entraining or prematurely transporting the WO₃ reactant or the WC product. For example, if the method of the present invention is carried out by placing and heating WO₃ powder in a space having a defined volume, for example, in a furnace, the flow rate of the atmosphere of molecular hydrogen and molecular methane through the furnace be at least 1 furnace volume per minute. The atmosphere flow rate is preferably at least 10 furnace volumes per minute, most preferably about 100 furnace volumes per minute. The maximum flow rate depends upon the physical form of the WO₃ powder and the particle size of the product.

The nature of the apparatus employed for heating in the method of the present invention is not believed to be critical to the success of the method. The apparatus should be appropriate for the amount of WO₃ to be treated. Smaller quantities of WO₃, on the order of 1 to 100 milligrams (mg), can be treated in a conventional thermal gravimetric analyzer (TGA). Larger quantities of WO₃, on the order of several grams, can be treated in a conventional tube furnace. When a tube furnace is employed, it is convenient to charge the WO₃ to an inert carrier (such as a quartz boat) in order to facilitate handling. The carrier should be structured, and the quantity of WO₃ placed in it selected, so as to ensure a constant flow of the flowing atmosphere throughout the treatment and to permit even heating of the WO₃. Stagnant areas or localized hot or cold spots are expected to adversely affect the uniformity of the resulting WC product.

A better understanding of the invention will be had upon reference to the following examples:

### Example 1

A 20 mg sample of WO₃ powder (GTE TO-3) was placed into a TGA and heated in an atmosphere containing 97 percent molecular hydrogen and 3 percent molecular methane. The total gas flow through the TGA was approximately 0.27 liters per minute (lpm), corresponding to about 2 furnace volumes per minute. The sample was heated at a rate of 20°C per minute from 25°C to 535°C, then heated at a rate of 5°C per minute from 535°C to 850°C, and held for 90 minutes at 850°C. The weight of the sample was monitored during treatment. The sample began to lose weight at 527±5°C and reached a maximum of 19.66 percent weight lost at a temperature of approximately 651°C. After that point, the sample began to gain weight, and within 15 minutes had achieved a stable overall weight loss of approximately 17.83 percent by weight (wt-%). It is believed that this stabilized weight corresponds roughly to the conversion of WO₃ into ditungsten carbide (W₂C). Such a conversion has a theoretical weight loss of 18.12 percent. Upon further heating, at a temperature of approximately 567±5°C the sample again began to gain weight, and eventually reached a steady state value of approximately 14.67 percent for the overall weight loss. It is believed that this weight loss corresponds roughly to the conversion of WO₃ into WC. The theoretical weight loss for such a conversion is 15.53 percent. The resulting product was cooled to room temperature and was found to be non-pyrophoric when exposed to air.

### Example 2

A 3g sample of the same WO₃ as used in Example 1 was placed in a quartz boat and loaded into a horizontal tube furnace of cylindrical construction. The furnace had an inside diameter of 2 inches (5.1cm) and a length of 16 inches (40.6cm). The volume of the furnace was thus about 0.82 liters. The sample of WO₃ was subjected to the same temperature program as employed in Example 1 with the same atmosphere containing 97 percent molecular hydrogen and 3 percent molecular methane. The total gas flow for the atmosphere was 81.5 lpm. Upon completion of the hold time, the product was cooled to room temperature and was found to be non-pyrophoric. X-ray diffraction analysis showed the sample to be composed solely of WC. The product was also subjected to scanning electron microscopy (SEM), which showed that the product retained the original shape of the WO₃ precursor material, but was composed of individual particles having an average diameter less than 0.1 »m. The product was also analyzed for total carbon content using a LECO carbon analyzer. The overall carbon content of the product was 6.13 wt-%. Replication of this example, save for reducing the temperature attained from 850°C to 660°C, yielded a product having more W₂C than WC. Increasing the proportion of methane to 40% at the reduced temperature also yielded a product with more W₂C than WC. An intermediate temperature of 750°C and a methane fraction of 7% also yielded a mixture of W₂C and WC, but with an increased WC content.

### Example 3

Example 2 was duplicated save for reducing the temperature attained from 850°C to 800°C and increasing the methane proportion of the atmosphere from 3 percent to 4 percent molecular methane. Upon cooling, the product was analyzed by X-ray diffraction and was found to contain a major portion of WC and a minor portion of W₂C. LECO carbon analysis showed the product to contain 5.18 wt-% total carbon.

### Example 4

Example 2 was duplicated save for reducing the hold time from 90 minutes to 30 minutes. Upon cooling, the product was analyzed by X-ray diffraction and found to contain a major portion of WC and only a trace of W₂C. The product was found by LECO carbon analysis to contain 6.07 wt-% total carbon.

### Example 5

Example 2 was duplicated save for increasing the methane proportion from 3 percent to 8 percent molecular methane. The product was then cooled and analyzed by X-ray diffraction. The product was found to contain WC with no detectable trace of W₂C present. The product contained 6.40 wt-% total carbon, as determined by a LECO carbon analyzer.

### Example 6

Example 5 was duplicated save for reducing the hold time at 850°C to 30 minutes. When cooled, the product was found by X-ray diffraction analysis to contain WC with no detectable trace of W₂C. LECO carbon analysis showed the product to contain 6.20 wt-% total carbon.

None of the products of Examples 2 to 6 contained any detectable trace of tungsten metal that had not combined with carbon in one form or another. The WC or major portions of WC obtained in Examples 2 to 6 all possessed average particle diameters between 0.05 and 0.2 micrometers.

The examples demonstrate that a WC powder of uniform, yet very small, particle size can be obtained by a method that is significantly simpler than prior methods of obtaining comparable fine WC powders. The only physical parameter changed during the performance of the method of the present invention is temperature, a very easily and economically controlled parameter. Since a constant flowing atmosphere of fixed proportion is employed, the present invention economically eliminates the prior need for careful regulation of the partial pressures of carbon monoxide and carbon dioxide (or other reactant gases) during the conversion of WO₃ or another solid, tungsten-containing material into WC. The present invention also economically eliminates the need for mechanisms connected to the treatment furnace for supplying changing atmospheres during different steps in the treatment process. The present invention also enjoys cost savings in that no special pre-treatment of the WO₃ or other material is required in order to achieve the benefits enjoyed by the invention. Similar results are expected with other combinations of heating rates and hold times, all of which are disclosed herein.

While our invention has been described in terms of several specific embodiments, other embodiments could readily be adapted by one skilled in the art. Accordingly, the scope of our invention is to be limited only by the following claims.

## Claims

1. A method for forming a fine grained tungsten carbide that has a particle size within a range of from 0.05 to 0.2 »m in diameter, which comprises heating a solid, tungsten-containing material in a flowing atmosphere containing molecular hydrogen and a molecular carbonaceous water-consuming gas in a fixed ratio, on a molar, gas volume or gas partial pressure basis, for a time sufficient to convert substantially all of said material to tungsten carbide, wherein said heating is carried out at a first heating rate of 5 to 50°C per minute from 25°C to 535°C, and at a second heating rate, lower than the first heating rate, of 1 to 10°C per minute from 535°C to a final temperature of 800°C to 855°C, and thereafter held at about said final temperature for 15 minutes to 3 hours.

2. A method as claimed in Claim 1, wherein said final temperature is 840°C to 855°C.

3. A method as claimed in Claim 1 or Claim 2, wherein said carbonaceous water-consuming gas is selected from methane, carbon monoxide and carbon dioxide.

4. A method as claimed in Claim 3, wherein said carbonaceous water-consuming gas is methane.

5. A method as claimed in Claim 4, wherein said atmosphere contains a ratio of 90 to 99 percent hydrogen to 1 to 10 percent methane, said percentages being on a molar, gas volume or gas partial pressure basis.

6. A method as claimed in Claim 5, wherein said ratio is 92 to 97 percent hydrogen to 3 to 8 percent methane.

7. A method as claimed in any one of the preceding claims, wherein said atmosphere contains argon.

8. A method as claimed in any one of the preceding claims, wherein said first heating rate is about 20°C per minute and said second heating rate is about 5°C per minute.

9. A method as claimed in Claim 8, wherein said temperature is held at about the final temperature for 30 to 90 minutes.

10. A method as claimed in any one of the preceding claims, wherein said material is heated in a space having a defined volume, and wherein the flow rate of said atmosphere is at least 1 volume per minute.

11. A method as claimed in Claim 10, wherein said flow rate of said atmosphere is at least 10 volumes per minute.

12. A method as claimed in any one of the preceding claims, wherein said material is powdered or particulate tungsten trioxide.

13. A method as claimed in Claim 12, comprising heating powdered or particulate tungsten trioxide in a flowing atmosphere containing argon, molecular hydrogen and molecular methane, the ratio of hydrogen to methane being fixed at 92 to 97 volume percent hydrogen to 3 to 8 volume percent methane, for a time sufficient to convert substantially all of the tungsten trioxide to tungsten carbide, wherein the heating is carried out at a first heating rate of about 20°C per minute from 25°C to 535°C, then at a second heating rate of about 5°C per minute about 535°C to 850°C, and thereafter held at about 850°C for 30 to 90 minutes, such that the resultant product achieves a constant weight.

## Patentansprüche

1. Verfahren zum Bilden eines feinkörnigen Wolframcarbids, das eine Teilchengröße innerhalb eines Bereichs von 0,05 bis 0,2 »m im Durchmesser aufweist, welches Verfahren umfaßt das Erwärmen des festen Wolfram enthaltenden Materials in einer fließenden Atmosphäre, die molekularen Wasserstoff und ein molekulares kohlenstoffhaltiges Wasser-verbrauchendes Gas in einem festgelegten Verhältnis auf einer Mol-, Gasvolumen- oder Gaspartialdruckbasis enthält, für einen ausreichenden Zeitraum, um im wesentlichen das gesamte Material zu Wolframcarbid zu überführen, wobei das Erwärmen durchgeführt wird bei einer ersten Heizrate von 5 bis 50°C pro Minute von 25°C bis 535°C und bei einer zweiten Heizrate, die niedriger ist als die erste Heizrate von 1 bis 10°C pro Minute von 535°C bis zu einer Endtemperatur von 800 bis 855°C und danach Halten bei etwa der Endtemperatur für 15 Minuten bis 3 Stunden.

2. Verfahren nach Anspruch 1, worin die Endtemperatur 840°C bis 855°C beträgt.

3. Verfahren nach Anspruch 1 oder 2, worin das kohlenstoffhaltige Wasser-verbrauchende Gas ausgewählt wird aus Methan, Kohlenmonoxid und Kohlendioxid.

4. Verfahren nach Anspruch 3, worin das kohlenstoffhaltige Wasser-verbrauchende Gas Methan ist.

5. Verfahren nach Anspruch 4, worin die Atmosphäre ein Verhältnis von 90 bis 99 Prozent Wasserstoff zu 1 bis 10 Prozent Methan enthält, wobei die Prozentsätze auf eine Mol-, Gasvolumen- oder Gaspartialdruckbasis bezogen sind.

6. Verfahren nach Anspruch 5, worin das Verhältnis 92 bis 97 Prozent Wasserstoff zu 3 bis 8 Prozent Methan beträgt.

7. Verfahren nach einem der vorhergehenden Ansprüche, worin die Atmosphäre Argon enthält.

8. Verfahren nach einem der vorhergehenden Ansprüche, worin die erste Heizrate etwa 20°C pro Minute und die zweite Heizrate etwa 5°C pro Minute beträgt.

9. Verfahren nach Anspruch 8, worin die Temperatur für 30 bis 90 Minuten bei etwa der Endtemperatur gehalten wird.

10. Verfahren nach einem der vorhergehenden Ansprüche, worin das Material in einem Raum mit einem definierten Volumen erwärmt wird und worin die Fließrate der Atmosphäre mindestens 1 Volumen pro Minute beträgt.

11. Verfahren nach Anspruch 10, worin die Fließrate der Atmosphäre mindestens 10 Volumina pro Minute beträgt.

12. Verfahren nach einem der vorhergehenden Ansprüche, worin das Material pulverförmiges oder teilchenförmiges Wolframtrioxid ist.

13. Verfahren nach Anspruch 12, umfassend das Erwärmen von pulverförmigem oder teilchenförmigem Wolframtrioxid in einer fließenden Argon, molekularen Wasserstoff und molekulares Methan enthaltenden Atmosphäre, wobei das Verhältnis von Wasserstoff zu Methan festgelegt ist bei 92 bis 97 Volumenprozent Wasserstoff zu 3 bis 8 Volumenprozent Methan für einen ausreichenden Zeitraum, um im wesentlichen das gesamte Wolframtrioxid zu Wolframcarbid zu überführen, wobei das Erwärmen durchgeführt wird bei einer ersten Heizrate von etwa 20°C pro Minute von 25°C bis 535°C, dann bei einer zweiten Heizrate von etwa 5°C pro Minute von etwa 535°C bis 850°C und danach Halten bei etwa 850°C für 30 bis 90 Minuten, so daß das entstehende Produkt ein konstantes Gewicht erreicht.

## Revendications

1. Procédé pour former du carbure de tungstène en grains fins, présentant une granulométrie comprise à l'intérieur d'une plage allant de 0,05 à 0,2 »m en diamètre, procédé qui consiste à chauffer un matériau solide contenant du tungstène, dans une atmosphère d'écoulement contenant de l'hydrogène moléculaire et un gaz moléculaire carboné, épuisant l'eau, dans un rapport fixe, sur une base molaire, sur une base de volume de gaz ou sur une base de pression partielle de gaz, pendant un temps suffisant pour convertir sensiblement la totalité dudit matériau en carbure de tungstène, procédé dans lequel ledit chauffage s'effectue à une première vitesse de chauffage de 5 à 50°C par minute de 25°C à 535°C, et à une seconde vitesse de chauffage, inférieure à la première vitesse de chauffage, de 1 à 10°C par minute, de 535°C à une température finale de 800°C à 855°C, la température étant ensuite maintenue à environ ladite température finale de 15 minutes à 3 heures.

2. Procédé selon la revendication 1, dans lequel ladite température finale est de 840°C à 855°C.

3. Procédé selon l'une des revendications 1 ou 2, dans lequel ledit gaz carboné épuisant l'eau est choisi parmi le méthane, le monoxyde de carbone et le dioxyde de carbone.

4. Procédé selon la revendication 3, dans lequel ledit gaz carboné épuisant l'eau est le méthane.

5. Procédé selon la revendication 4, dans lequel ladite atmosphère contient un rapport de 90 à 99 % d'hydrogène pour 1 à 10 pour-cent de méthane, lesdits pourcentages étant sur une base molaire, sur une base de volume de gaz ou sur une base de pression partielle de gaz.

6. Procédé selon la revendication 5, dans lequel ledit rapport est de 92 à 97 % d'hydrogène pour 3 à 8 pour-cent de méthane.

7. Procédé selon l'une quelconque des revendications précédentes, dans lequel ladite atmosphère contient de l'argon.

8. Procédé selon l'une quelconque des revendications précédentes, dans lequel ladite première vitesse de chauffage est d'environ 20°C par minute et ladite seconde vitesse de chauffage est d'environ 5°C par minute.

9. Procédé selon la revendication 8 dans lequel ladite température est maintenue à environ la température finale pendant 30 à 90 minutes.

10. Procédé selon l'une quelconque des revendications précédentes dans lequel ledit matériau est chauffé dans un espace d'un volume défini et dans lequel le débit d'écoulement de ladite atmosphère est d'au moins une fois ce volume par minute.

11. Procédé selon la revendication 10 dans lequel ledit débit d'écoulement de ladite atmosphère est d'au moins 10 volumes par minute.

12. Procédé selon l'une quelconque des revendications précédentes, dans lequel ledit matériau est du trioxyde de tungstène pulvérulent ou particulaire.

13. Procédé selon la revendication 12, consistant à chauffer du trioxyde de tungstène pulvérulent particulaire dans une atmosphère en écoulement contenant de l'argon, de l'hydrogène moléculaire et du méthane moléculaire, le rapport de l'hydrogène au méthane étant fixé de 92 à 97 pour-cent de volume hydrogène pour 3 à 8 pour-cent de volume de méthane, pendant un temps suffisant pour convertir sensiblement la totalité du trioxyde de tungstène en carbure de tungstène, procédé dans lequel le chauffage s'effectue à une première vitesse de chauffage d'environ 20°C par minute de 25°C à 535°C puis à une seconde vitesse de chauffage d'environ 5°C par minute d'environ 535°C à 850°C, la température étant ensuite maintenue à environ 850°C pendant 30 à 90 minutes, de façon que le produit obtenu prenne un poids constant.
